# EUROPEAN PATENT APPLICATION

(11) **EP 1 469 410 A1**
(43) Date of publication of application: **20.10.2004**
(21) Application number: 04251868.8
(22) Date of filing: 30.03.2004
(51) Int. Cl.: G06F 17/60, H04M 15/00, H04L 12/14

(54) **Methods for unified billing across independant networks**

(30) Priority: 15.04.2003 US 413383
(71) Applicant: LUCENT TECHNOLOGIES INC., Murray Hill, New Jersey 07974-0636 (US)
(72) Inventor: Benenati, David, Somerset, New Jersey 08873 (US); Feder, Peretz Moshes, Englewood, New Jersey 07631 (US); Lee, Nancy Yushan, Morristown, New Jersey 07960 (US); Martin-Leon, Silvia, Swindon SN5 9GD (GB); Shapira, Reuven, Berkeley Heights, New Jersey 07922 (US)
(74) Representative: Watts, Christopher Malcolm Kelway, Dr.

(57) **Abstract**

A method of generating a unified billing statement common to at least two independent networks is described, where accounting records of a user are collected from at least two networks and a single billing statement encompassing the two networks is generated for the user based on the accounting records. The accounting records may include Call Data Records (CDRs) in a UMTS, Usage Data Records (UDRs) in a cdma2000 system and accounting records of a wireless local area network (WLAN), for example. The accounting records may include user attribute information common to each of the networks. This common user attribute information may be used to generate common billing records which are then used to generate the single, unified billing.

## Description

### BACKGROUND OF THE INVENTION

### Field of the Invention

The present invention relates to methods for common billing across independent networks having disparate access technologies.

### Description of Related Art

Users of high speed packet data services may include users that, although stationary while connected, are portable (i.e., connectable from different locations) as well as users who are moving while connected. Some access technologies (e.g., IEEE 802.11b) focus on relatively stationary but portable wireless data users in relatively small (intra-city) coverage areas, providing them with a packet data service similar to that of Local Area Networks (LANs). Networks or communication systems based on these access technologies may be referred to as Wireless LANs (WLANs). Other wireless technologies, such as those employing code division multiple access (CDMA) technologies, are typically designated for wide area coverage and accommodate data users who may be moving at high speeds (e.g., in a vehicle or train) over large distances (e.g., inter city, cross-country).

Systems employing wide area technologies, such as General Packet Radio Service (GPRS), cdma2000, or Universal Mobile Telecommunication System (UMTS), may generally be referred to as 2.5G or 3G systems. Wireless 2.5G and third generation (3G) communication systems are currently introducing technologies in order to be spectrally efficient while increasing capacity and supporting data services. These efforts have resulted in the development of the 3G-1x, 1xEV-DO, and 1xEV-DV standards, for example. Similarly, the UMTS standard introduces the capability of high speed packet data services, which can be enhanced with several advanced technologies or enhancements as part of HSDPA. However, the data rates currently achievable by 2.5G/3G wide area cellular networks providers are typically not as high as data rates achievable in WLANs.

Accordingly, since 2.5G/3G systems (e.g., GPRS, CDMA, UMTS) and WLANs (e.g., systems implementing IEEE 802.11b) have complementary strengths, users may wish to use both. It would be desirable for a user to receive a single bill encompassing any and all systems accessed by the user. At present, a user requires separate accounts (and hence separate bills) for each system being accessed. Even if mechanisms are put into place to use a single account identifier (i.e., Network Access Identifier), there is no "accounting standard" common to the various 2.5G/3G and WLAN technologies. An accounting standard typically comprises a set of accounting records, the parameters within those records, the triggers for generating the records, a format for storing them, and a protocol for transmitting them to an accounting server. Thus, an accounting server with a common interface to a single billing system is not shared by independent networks having disparate access technologies (e.g., a fixed WLAN system and a mobile 2.5G/3G system) because the accounting records have different formats, for example.

### SUMMARY OF THE INVENTION

A method of generating a billing statement common to at least two independent networks is described, where accounting records of a user are collected from at least two networks and a single billing statement encompassing the two networks is generated for the user based on the accounting records. The accounting records may include Call Data Records (CDRs) in a GPRS/UMTS, Usage Data Records (UDRs) in a cdma2000 system and accounting records of a wireless local area network (WLAN), for example. The accounting records may include user attribute information common to each of the networks, and unified billing records which are used to generate the single billing statement may be generated based on the common user attribute information.

### BRIEF DESCRIPTION OF THE DRAWINGS

Exemplary embodiments of the present invention will become more fully understood from the detailed description given herein below and the accompanying drawings, wherein like elements are represented by like reference numerals, which are given by way of illustration only and thus do not limit the exemplary embodiments of the present invention and wherein:

FIG. 1 illustrates a network configuration between a user and the user's home network in accordance with an exemplary embodiment of the invention;

FIG. 2 illustrates a flow diagram for providing unified billing between multiple independent networks in accordance with an exemplary embodiment of the invention;

FIG. 3 is a flow diagram illustrating unified accounting and billing between multiple independent networks in accordance with another exemplary embodiment of the invention; and

FIG. 4 is a block diagram illustrating unified accounting and billing between multiple independent networks in accordance with another exemplary embodiment of the invention.

### DETAILED DESCRIPTION OF EXEMPLARY EMBODIMENTS

Although principles of the present invention are described in the context of integrating wide area cellular wireless communication systems such as 2.5G/3G systems with Wireless Local Area Network (WLAN) systems for unified billing and/or unified accounting and billing, and will be described in this exemplary context, it should be noted that the exemplary embodiments shown and described herein are meant to be illustrative only and not limiting in any way. As such, various modifications will be apparent to those skilled in the art for application to other transmission systems and are contemplated by the teachings herein. For example, the exemplary embodiments could be configured to integrate any two (or more) systems for unified billing and/or unified accounting and billing where System 1 and System 2 are of different access network technologies, i.e., System 1 could be a wireline xDSL system and System 2 could be a 3G cdma2000 system.

If used herein, any of the terms base station, access network, radio access network (RAN) or radio network (RN), system equipment or Node-B may be synonymous, for example. Each term may describe equipment that provides data connectivity between a packet data network (PDN) such as the Internet, and one or more mobile stations, for example. Additionally, the terms mobile station, mobile user, user, user equipment (UE), mobile, remote station, mobile subscriber or subscriber, if used herein, may be considered synonymous, and may describe a remote user of wireless resources in a wireless communication network or a device providing data connectivity to a user, for example.

Exemplary embodiments of the present invention are directed to a method of unifying billing records and/or unifying accounting and billing records from two or more networks that may have disparate access technologies, for example, so that a user of the networks may receive a single bill encompassing any and all networks accessed by the user.

For example, this may be accomplished by performing a post processing function on accounting records of one of the networks by that network, so as to enable a single service provider to generate common billing information and a unified billing statement encompassing user charges from both networks for the user. Alternatively, an accounting server may be shared between the visited network and the user's home network, to enable the user's single service provider to collect and post process accounting records from both networks to generate a unified billing statement for both networks.

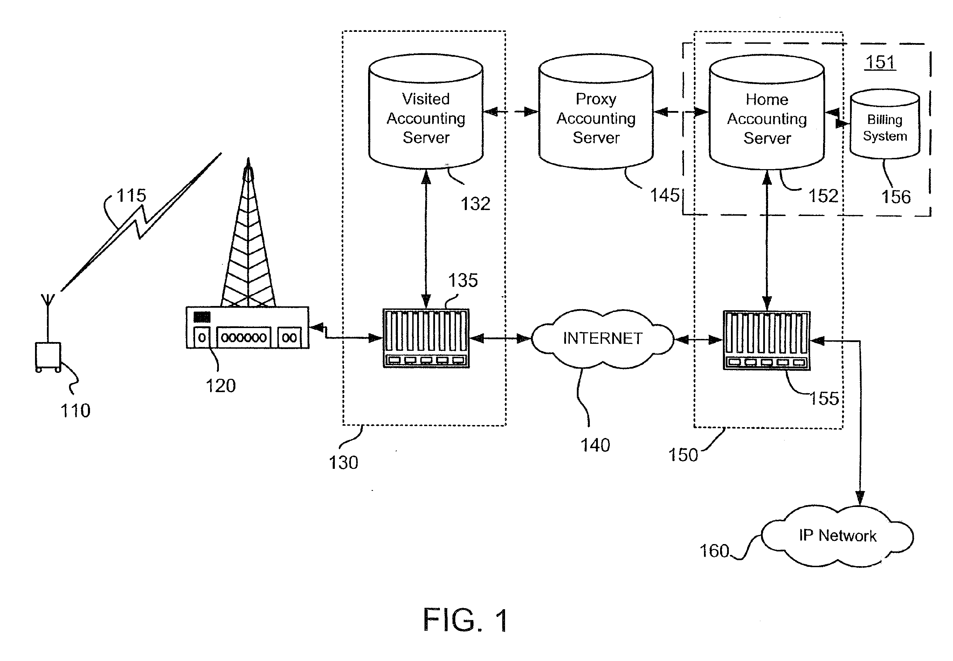

FIG. 1 illustrates a network configuration between a user and the user's home network in accordance with an exemplary embodiment of the invention. Referring to FIG. 1, a user 110 communicates via a link 115 to a radio network (RN) 120 serving a particular sector the user 110 is located in, for example. Messages containing accounting records for the user 110 are sent, possibly via a Proxy Accounting Server 145, to the user 110's Home Accounting Server 152. In FIG. 1, RN 120 happens to be part of a visited access provider network 130, it being understood that the service provider owning the visited access provider network 130 (i.e., the visited access provider) may be the same as or different from the owner of the home network 150 (i.e., the user's home service provider). The user 110's home network 150 also has connected to it a separate radio network (not shown in FIG.1 for reasons of clarity) independent of RN 120.

A Visited Accounting Server 132 resides in the visited access provider network 130. In general, a visited service provider provides access services to a user through the establishment of a service agreement with the user's home service provider. The service agreement typically includes that the user's home service provider will bill the user on behalf of the visited access provider. In FIG. 1, visited access provider network 130 may also be referred to as a visited service provider, and may be embodied as a WLAN system, for example, it being understood that this could also be cdma2000 system. If the visited access provider and the home service provider are the same, then service agreements are not needed and Visited Accounting Server 132 may be the same as Home Accounting Server 152.

The Visited Accounting Server 132 may be embodied as a Remote Authentication Dial In User Service (RADIUS) AAA server, for example, that operates according to a RADIUS protocol to perform a visited accounting server function (V-ASF). However, the exemplary embodiments of the present invention are not so limited, as Visited Accounting Server 132 may operate according to a different protocol such as Diameter, for example. Furthermore, Visited Accounting Server 132 may be a different entity, such as a Charging Gateway Function (CGF), configured so as to operate based on other protocols. These protocols are intended to provide a framework for accounting, and may also provide a framework for other applications such as authentication, etc. A V-ASF in Visited Accounting Server 132 may be part of the visited network infrastructure, for example.

In the case of the mobile being in a visited network, a V-ASF in Visited Accounting Server 132 may communicate with a home accounting server function (H-ASF) implemented by a Home Accounting Server 152 of the user's Home IP Network (home network 150). This could be done via Proxy Accounting Server 145. A function of the Proxy Accounting Server 145 is to identify the user 110's Home Accounting Server 152 and send accounting .

Home Accounting Server 152 interfaces to the home service provider's (i.e., home network 150) billing system 156, which may include a billing mediation function. Although the home network 150 is described as a cellular wireless 2.5G/3G system such as a GPRS/UMTS or cdma2000 system, it should be understood that the user's home network 150 could be a fourth generation (4G) wireless communication system or the user's wireline service provider, for example. The GPRS/UMTS network or system may be GPRS only, UMTS only, or both. This is because GPRS and UMTS access networks share a common core network. The billing system 156 may be part of an existing back-office infrastructure 151 in the user's home network 150, which is the network where the user 110 has an account for obtaining IP based data services. The home network 150 may be accessible according to the user 110's network access identifier (NAI). The NAI is a user@domain construct which identifies the user and its home IP network.

In order for the cellular wireless service provider to own and bill user 110 when the user roams between access technologies, a single set of billing records should be produced from the accounting records generated by each access network. In other words, the ASF entity of the WLAN (visited network 130) may need to interface directly or indirectly (via a separate records post processor) with the ASF owned by the cellular wireless service provider (in this exemplary embodiment, this may be home network 150, which may be embodied as any of a cdma2000, GPRS/UMTS network, 4G system, user's wireline service provider, etc.).

The exemplary embodiments of the present invention enable accounting records from networks having disparate access technologies (e.g., WLAN) to be transmitted to, and understood by, the user's home network. This enables the user's home network 150 to use its existing back-office infrastructure 151 to generate a single bill for the user 110 both for WLAN system 130 access and 2.5G/3G system (i.e., home network 150) access.

For example, the wide area cellular wireless service providers' existing back-office infrastructure may be reused to provide billing for an independent visited access provider network 130. In the context of billing, wide area cellular wireless service provider's (WSP's) existing back-office infrastructure may refer to the equipment that receives accounting records of packet data service for wireless users and that generates bills from those records. The particulars may vary depending on the service provider, but may consist of some sort of (optional) records post processor, billing mediation function and billing function. In this exemplary embodiment, home network 150 could be said to own back-office infrastructure 151.

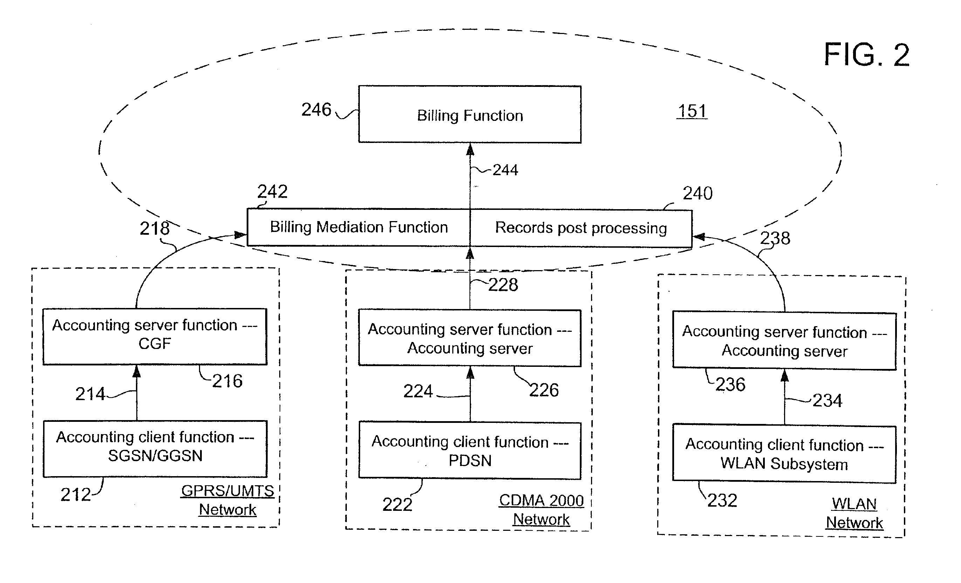

Records post processing function 240, billing mediation function 242, and billing function 246 may be an example of back-office infrastructure 151 of the home network 150, as shown in dotted-line in FIG. 2, although the present invention is not so limited. Service providers such as VERIZON WIRELESS and SPRINT PCS, for example, offer 3G packet data service; thus such back-office infrastructure is already in place. In one exemplary embodiment, networks 130 and 150 may be owned by different service providers. Although the bill will be generated by the subscriber's back-office infrastructure (such as back-office infrastructure 151 in FIG. 1), revenue may be shared by both service providers (visited access provider network 130 and home network 150). In another exemplary embodiment, networks 130 and 150 may be owned by the same service provider.

To provide further context for the exemplary embodiments of the present invention, a summary of the accounting records and billing architectures used in 2.5/3G and WLAN communication systems are provided. Although 3G accounting records are standardized, cdma20000 and GPRS/UMTS data billing architectures are fundamentally different from each other. In GPRS/UMTS, network elements such as SGSNs and GGSNs collect accounting information in the form of Call Detail Records (CDRs). Charging information such as data volume and session duration may be collected for each user by the SGSNs and GGSNs serving that user. The SGSN may collect charging information for each user related with the radio network usage, for example, while the GGSN may collect charging information for each user related with the external data network usage. Both SGSNs and GGSNs collect charging information on usage of the GPRS/UMTS network resources. The SGSNs and GGSNs may transfer this charging information and other user identifying information to a Charging Gateway Functionality element (CGF) in the form of a CDR, as specified in the 3^{rd} Generation Partnership Project (3GPP) document entitled "Technical Specification Group Services and System Aspects; Telecommunication Management; Charging management; Call and event data for the Packet Switched (PS) domain", 3GPP TS 32.015, V3.11.0 (2003-03) (Release 1999). The CGF may be a separate entity in the UMTS network. For example, the CGF may be implemented by or within a AAA server.

The CDRs include the International Mobile Subscriber Identity (IMSI) to identify the user (e.g., the mobile subscriber in the transaction recorded, also referred to as the served party and/or the calling subscriber). The SGSN and GGSN transfer the CDRs to the CGF. Primary functions of the CGF may include the collection of CDRs from the SSGNs/GGSNs, intermediate CDR storage buffering, and transfer of the CDR data to a GPRS/UMTS billing system. The CGF may also perform activities such as consolidation, pre-processing of CDR fields, filtering of repeated or non-required CDR fields, and adding operator-defined fields for specific billing systems, for example.

In CDMA systems such as cdma2000 systems, a PDSN generates both event-driven and periodic interim accounting records in the form of Usage Data Records (UDRs). A PDSN is in every 3G cdma2000 data network. The PDSN may interface with a Radio Network and with a AAA server such as H-AAA Server 152 or V-AAA Server 132 (if the visited network is a cdma2000 network), for example, which could be embodied as a RADIUS AAA server.

The RADIUS server is a specific AAA server implementation used in cdma2000 networks for AAA functionality. The RADIUS servers may be located in the Home IP Network, which is the home network 150 that provides IP based data services to the user (e.g., the Home IP Network is where the user's network access identifier (NAI) is home located (the NAI is a user@domain construct which identifies the user and home IP network of the user)). The Home IP Network may be a publicly accessible Internet Service Provider (ISP) network, cdma2000 wireless network, etc. Additionally, RADIUS servers may be located in a Broker Network (Broker RADIUS servers). A Broker Network is a collection of administrative domains that contain intermediate of broker RADIUS servers that have security relationships with, and securely transfer RADIUS messages between, the Home IP Network and a Visited Access Provider Network, which is a visited service provider that provides access services through the establishment of a service agreement with a home service provider. Further, RADIUS servers may reside in a Visited Access Provider Network or visited network (i.e., Visited RADIUS server).

The accounting records and/or RADIUS messages contained in the UDRs may include user traffic information such as packet counts, air interface parameter values, NAI data and PDSN address and other parameters as defined by the cdma2000 Vendor Specific Attributes. For example, these vendor attributes may be embodied as described in Table 10 of the 3rd Generation Partnership Project 2 (3GPP2) document entitled "Wireless IP Network Standard", 3GPP2 P.S0001-B, Version 1.0.0, October 25, 2002, page 56.

The PDSN sends the UDRs to a AAA server (RADIUS server), which could be H-AAA server 152 for example, that may post process the accounting records by performing activities such as consolidation, pre-processing of UDR fields, filtering of repeated or non-required UDR fields, and adding operator-defined fields for specific billing systems, for example. Alternatively, the AAA server may transfer a UDR "as is" to a Billing Mediation Server (BMS) for post processing and filtering. The BMS may be a central application server that may reside at the WSP's data service center (DSC), for example. The BMS may send the post-processed records to a billing function. The DSC, and hence the billing mediation, and record post processing functions could be part of existing back-office infrastructure of the WSP, such as back-office infrastructure 151 of the user home network 150, for example.

In 802.11 systems (WLANs), neither standardized accounting records nor standardized accounting network elements are defined. For WLANs, some element in the WLAN subsystem generates session accounting records and sends them to a local or centralized ASF server, which may be a RADIUS AAA server, for example.

FIG. 2 illustrates a flow diagram for providing common accounting between multiple independent networks in accordance with an exemplary embodiment of the invention. In FIG. 2, three different networks are described as communicating user accounting data of a particular user for processing and integration at a central billing mediation function 242, which may be located at the user's cellular wireless service provider's data service center (DSC), for example. In this exemplary embodiment, existing back-office infrastructure residing in a service provider's DSC would implement the billing mediation function 242, records post processing function 240 and billing function 246 in order to generate a unified billing statement containing charges from all three networks to the user. If the WSP is the user's home network 150, these functions are implemented by the back-office infrastructure 151 in FIG. 1.

Referring to FIG. 2, in a GPRS/UMTS access network, a GGSN or SGSN implementing an accounting client function 212 may generate and transfer user CDRs via a secure network connection 214 to a network element implementing the charging gateway function (CGF) 216. In a CDMA 2000 access network, a PDSN implementing an accounting client function 222 may generate and transfer 3GPP2 accounting records of the user via a secure network connection 224 to a AAA server, such as Visited Accounting Server 132 (if the CDMA system is a visited network) or Home Accounting Server 152 (if the CDMA system is the user's home network 150), for example. The AAA server may perform an accounting server function 226 as described above.

Further, in a WLAN (e.g., 802.11 network), an element implementing an accounting client function 232 may generate and transfer WLAN accounting records of the user via a secure network connection 234 to an accounting server of the WLAN, such as Visited Accounting Server 132 (if the WLAN system is a visited network) or Home Accounting Server 152 (if the WLAN system has the same owner as the user's home network 150), for example. The element implementing the client function 232 may be a WLAN gateway or foreign agent in a subsystem of the WLAN (WLAN Subsystem), for example. The accounting server such as an AAA server may perform an accounting server function 236 as described above.

The accounting servers performing the accounting server functions 226 and 236 may be embodied as Remote Authentication Dial In User Service (RADIUS) servers, for example. However, the exemplary embodiments are not so limited, as accounting servers implementing accounting server functions 226 and/or 236 may be configured so as to understand and operate based on the Diameter protocol, for example. The accounting servers communicate with a billing mediation function 242 via secure connections 228 and 238. The UMTS CGF implementing accounting server function 216 may also use protocols other than RADIUS or Diameter, for example.

In accordance with the exemplary embodiments of the present invention, the accounting client function 232 of the WLAN may generate a set of accounting record attributes contained in the WLAN accounting records of the user that are transferred via a secure network connection 234 (and possibly via a proxy accounting server such as Proxy Accounting Server 145) to the accounting server (such as Home Accounting Server 152) implementing the accounting server function 236. Attributes are translated at the home network 150 into a format understood by the home network. This enables the WLAN to interface easily with WSPs using different technologies. This set of accounting attributes and records may be translated by a post processing function 240 into corresponding GPRS/UMTS or cdma2000 accounting attributes and records, for example, where the corresponding attributes are predetermined by the service provider for ease of integration with the WSP's existing billing system. The following Table 1 lists an example set of RADIUS attributes that could be used for WLAN accounting records in the left hand column and illustrates how these attributes could be translated into standardized GPRS/UMTS accounting attributes (CDR fields). As shown in Table 1, some CDR fields may be hard coded or retrieved from a subscriber database instead of defining an equivalent WLAN accounting attribute. Table 1 also shows that the set of accounting attributes may include a unique identifier for the access network and information to determine the access network type of the WLAN, so to give the service provider the option of applying different billing options and/or rates (e.g., flat, time, volume, location, access technology based).

**Table 1**

| **Mapping of WLAN RADIUS Accounting Attributes to GPRS/UMTS CDR Fields** | | | |
|---|---|---|---|
| **CDR Field Name** | **Description** | **Value** | **WLAN Attribute Name** |
| Record type | This field identifies the type of the record | Fixed value: G-CDR/S-CDR | Fixed value = 802.11 |
| Served IMSI | IMSI of the served party. Identifies the subscriber involved in the transaction | It is retrieved from RADIUS subscriber database | NAI |
| Served MSISDN | The primary MSISDN of the subscriber | It is retrieved from RADIUS subscriber database | |
| GGSN Address | The IP address of the WLAN Accounting Client | The WLAN Accounting Client address | NAS-IPAddress |
| Charging ID | PDP context identifier used to identify this PDP context in different records created by GSNs | Generated by RADIUS accounting server. Received in accounting messages | Acct- Session-Id |
| SGSN Address | The IP address of the network element that generates the charging records | WLAN Gateway address (non roaming users) | NAS-IPAddress |
| Access Point Name Network Identifier | The logical name of the connected access point to the external packet data network or certain services provided by the WSP. Can be part of NAI | Fixed value given to the user | Can be described as: vpn/username |
| PDP Type | PDP type, i.e. IP, PPP etc | Fixed value: IP | Type: IP |
| Served PDP Address | The PDP address of the served IMSI. This is a network layer address so it described as the IP type (i.e., IPv4 or IPv6) | Obtained from WLAN gateway accounting records | Framed-IP-Address |
| Dynamic Address Flag | This field indicates that the PDP address is dynamically allocated for that particular PDP context | Fixed value: always dynamic | Type: Dynamic |
| List of Traffic Data Volumes | A list of changes in charging conditions for this PDP context, each time stamped. | Volumes obtained from WLAN gateway Accounting Interim Updates and Stop (Interim updates contain cumulative values, while this element does not) | Acct-Input-Octets and Acct-Output-Octets |
| Record Opening Time | Time stamp when the record is opened | Generated by RADIUS accounting server: time of the reception of the Accounting Start message or other in the case of partial record. | Event_Timestamp |
| Duration | Duration if this record in AAA | Generated by RADIUS accounting server. The duration can be calculated by subtracting the Acct-Session-Time and any Acct-Delay-Time | Acct-Session-Time |
| System Type | Indicates the 3G-UMTS System | Enumerated value that can be set to' 'WLAN' | NAS-Port-Type=802.11 |

As an alternative to mapping WLAN attributes to 2.5G/3G attributes, the following Table 2 proposes a set of RADIUS attributes that could be used for accounting records that are common to both the WLAN and 2.5G/3G systems such as GPRS/UMTS and cdma2000 systems. The standardized GPRS/UMTS and cdma2000 accounting records could be translated into a common set of accounting attributes as shown in Table 1, for example. Translating accounting records into a common set of attributes may be useful if the user's home network is a wireline network and the user accesses GPRS/UMTS, cdma2000, and WLAN networks, for example. The exemplary embodiments of the present invention incorporate both translating only the WLAN accounting records into a form that matches the GPRS/UMTS or cdma2000 accounting records, as well as translating accounting records from three or more systems having different access technologies into a common set of attributes.

**Table 2**

| **Set of Common RADIUS Accounting Attributes** | | |
|---|---|---|
| **Attribute Name** | **RADIUS ATTRIBUTE** | **Description** |
| User-Name | 1 | user@corpA.com or IMSI@wsp.com |
| User-Password | 2 | |
| NAS-IP-Address | 4 | IP address of WLAN Gateway or FA |
| Service-Type | 6 | |
| Framed-IP-Address | 8 | User IP address |
| Reply-Message | 18 | Reject reason if any |
| State | 24 | |
| Class | 27 | |
| Session-Timeout | 28 | Timeout period followed by a forced logout |
| Called-Station-ID | 30 | SIP: IP/MAC of WLAN Gateway MIP: Care-of-address/MAC of FA |
| NAS-ID | 32 | IP address |
| Acct-Status-Type | 40 | Start, stop, interim accounting update |
| Acct-Delay-Time | 41 | Event to sent accounting delay |
| Acct-Input-Octets | 42 | Volume based input accounting record |
| Acct-Output-Octets | 43 | Volume based output accounting record |
| Acct-Session-ID | 44 | Session ID associated with the accounting record |
| Acct-Session-Time | 46 | Time based accounting record |
| Acct-Input-Packets | 47 | Volume based accounting record |
| Acct-Output-Packets | 48 | Volume based accounting record |
| Acct-Terminate-Cause | 49 | Explicit, timeouts, Reset, NAS request/error/reboot |
| NAS-Port-Type | 61 | Ethernet, 802.11, cdma2000, UMTS |
| EAP Message | 79 | EAP method used for 802.1x authentication |
| Acct-Interim-Interval | 85 | Accounting update interval |

In FIG. 2 each radio access (GPRS/UMTS , CDMA 2000 and WLAN (e.g., 802.11)) networks may thus generate their own accounting records with the aforementioned common attributes, so as to be post processed at a DSC of the WSP. For example, a billing mediation server at the DSC may perform a Billing Mediation Function 242 and a post processing function 240 to provide unified billing records, via secure connection 244, to a billing function 246, which may be the billing system of the CDMA or GPRS/UMTS network, for example.

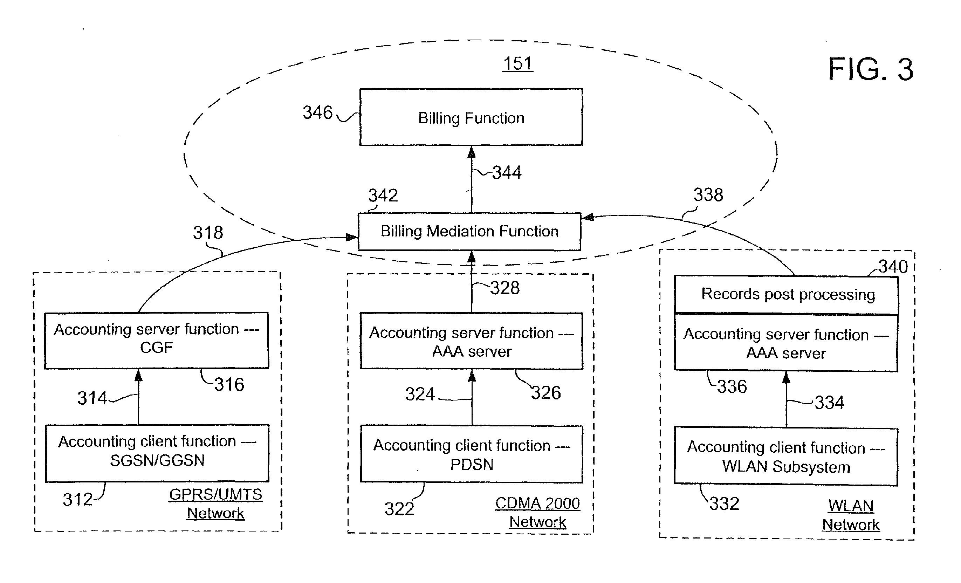

FIG. 3 is a flow diagram illustrating common accounting between multiple independent networks in accordance with another exemplary embodiment of the invention. FIG. 3 is similar to FIG. 2, thus only the differences are discussed for clarity. In FIG. 3, the accounting servers are shown as AAA servers in the CDMA and WLAN networks The WLAN records are post processed by the AAA server (RADIUS server) of the WLAN network. Additional plug-ins, such as software customized to post process the WLAN records as desired by the user's home network 150 or WSP, may be employed for post processing by the AAA server. Furthermore, in order to comply with a unified billing mediation format different WLAN AAAs may collect different records and/or attributes, necessitating different plug-ins. Once processed by the AAA server associated with the WLAN network, the WLAN records may be forwarded directly to billing mediation function 342. As these records have already been processed in the WLAN network, it may be possible to directly provide these records to billing mediation function 342 without any post processing requirements at the billing mediation function 342, as shown in FIG. 3.

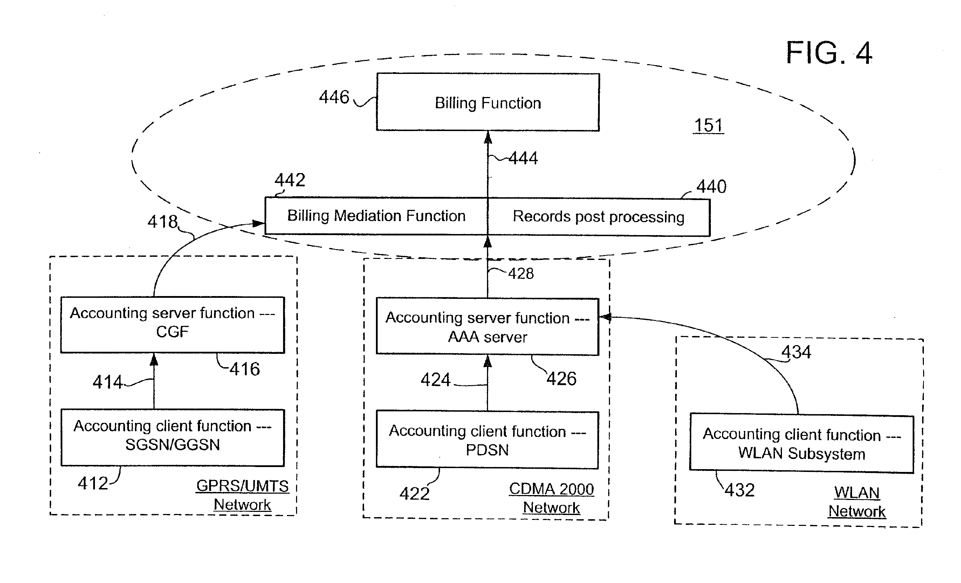

FIG. 4 is a block diagram illustrating common accounting between multiple independent networks in accordance with another exemplary embodiment of the invention. In FIG. 4, the AAA servers in the 802.11 (WLAN) and CDMA systems have been combined into a single AAA infrastructure element commonly serving both systems.

Another exemplary embodiment of the present invention consists of two networks. The first network may be a wide area cellular wireless service provider's (WSP's) preexisting wide area cellular network with standardized accounting. This network interfaces with the WSP's preexisting back-office infrastructure, including a billing system. The second network may be a WLAN. To enable the WSP to capitalize on its existing infrastructure, the accounting system of the WLAN interfaces with the preexisting billing system of the WSP as described by the present invention. This enables the WSP to generate a single billing statement for a data user, regardless of whose access network or what type of access network is used during the user's data session(s). The ability to provide unified billing enables the WSP to "own" a data user when the user roams between access technologies.

The exemplary embodiments of the present invention being thus described, it will be obvious that the same may be varied in many ways. Such variations are not to be regarded as a departure from the spirit and scope of the exemplary embodiments of the invention, and all such modifications as would be obvious to one skilled in the art are intended to be included within the scope of the following claims.

## Claims

1. A method of generating a billing statement common to at least two independent communication networks, comprising:
collecting accounting records of a user from said at least two networks; and
generating a single billing statement encompassing said at least two networks for the user based on the accounting records.

2. The method of claim 1, wherein said generating includes:
post processing said collected accounting records at one of said at least two networks; and
mapping said post-processed records to accounting records of the other of said at least two networks to generate a plurality of unified billing records; and
generating the single billing statement from the unified billing records

3. The method of claim 1, wherein said generating includes:
[0001] post processing said collected accounting records into a set of accounting record attributes and records that are common to the other of said at least two networks; and
implementing a billing mediation function and billing function with said post-processed records using existing back-office infrastructure residing in one of said at least two networks to generate a unified billing statement containing charges from all networks to the user,
wherein said post processing and implementing may be performed separately by said at least two networks.

4. A method of generating a single billing statement common to at least two independent networks, comprising:
collecting accounting records of a user from at least two or more of Call Data Records (CDRs) in a GPRS/UMTS, Usage Data Records (UDRs) in a cdma2000 system and accounting records of a wireless local area network (WLAN);
generating billing records of the user from the collected accounting records; and
generating a single billing statement for the user from the generated billing records.

5. The method of claim 4, wherein said generating a single billing statement further includes:
post processing said collected accounting records at one of said at least two networks; and
using said post-processed records to generate billing records in a format common to each of said at least two networks, wherein said billing records of said user are in a format common to each of said at least two networks.

6. The method of claim 4, further comprising:
post processing said collected accounting records at one of said at least two networks, wherein said generating billing records further includes mapping said post-processed records to accounting records of the other of said at least two networks to generate a plurality of common billing records.

7. A method of providing accounting information common to at least two independent networks, comprising:
processing accounting records of a user received from each of said at least two networks, said processed accounting records including user attribute information common to each of said at least two networks; and
generating common billing records of the user encompassing both networks based on the common user attribute information.

8. A method of generating a billing statement common to at least two independent communication networks, comprising:
collecting accounting records of a user from said at least two networks;
re-using existing back-office infrastructure of one of said at least two networks to generate a single billing statement from the collected accounting records encompassing said at least two networks for the user.

9. The method of claims 1, 4 or 8, wherein said at least two networks include a wireless local area network (WLAN) and one of a wide area cellular communication system and the user's wireline service provider. the wide area cellular communication system being one of a GPRS/UMTS, cdma2000 system and fourth generation (4G) wide area cellular communication system.

10. The method of claims 1,4,7 or 8, wherein
said at least two networks have disparate access technologies;
existing back-office infrastructure of one of said at least two networks is re-used for said generating of the single billing statement.; and
revenue resulting from said generated single billing statement is shared by said at least two networks.
